# EUROPÄISCHE PATENTSCHRIFT

(11) **EP 2 260 045 B1**
(45) Veröffentlichungstag und Bekanntmachung des Hinweises auf die Patenterteilung: **12.09.2012**
(21) Anmeldenummer: 09728475.6
(22) Anmeldetag: 23.03.2009
(51) Int. Cl.: C07F 9/50, C08K 5/00, C08K 5/51

(54) **UNGESÄTTIGTE DIPHOSPHINMONOXIDE**
UNSATURATED DIPHOSPHINE MONOXIDES
MONOXYDES DE DIPHOSPHINE INSATURÉS

(30) Priorität: 01.04.2008 EP 08153886
(43) Veröffentlichungstag der Anmeldung: 15.12.2010
(73) Patentinhaber: BASF SE, 67056 Ludwigshafen (DE)
(72) Erfinder: Tishkov, Alexander, Moskau 11729 (RU); Massonne, Klemens, 67098 Bad Dürkheim (DE)
(86) Internationale Anmeldenummer: PCT/EP2009/053339
(87) Internationale Veröffentlichungsnummer: WO 2009/121736

(56) Entgegenhaltungen:
- DATABASE CA [Online] CHEMICAL ABSTRACTS SERVICE, COLUMBUS, OHIO, US; FOSS, V. L. ET AL: "Effect of steric hindrances on the relative thermodynamic stability of trialkylalkoxydiphosphine monoxides and their isomeric anhydrides" XP002532591 gefunden im STN Database accession no. 1984:103467 & ZHURNAL OBSHCHEI KHIMII , 53(10), 2193-9 CODEN: ZOKHA4; ISSN: 0044-460X, 1983,
- DATABASE CA [Online] CHEMICAL ABSTRACTS SERVICE, COLUMBUS, OHIO, US; FOSS, V. L. ET AL: "Interconversion of monoxides of symmetric dialkyldialkoxydiphosphines and their isomeric anhydrides" XP002532592 gefunden im STN Database accession no. 1980:128147 & ZHURNAL OBSHCHEI KHIMII , 49(11), 2428-33 CODEN: ZOKHA4; ISSN: 0044-460X, 1979,
- LUTSENKO, I. F. ET AL: "Rearrangements of diphosphine oxides and anhydrides of phosphorus acids. Phosphorotropic tautomerism" PURE AND APPLIED CHEMISTRY , 52(4), 917-44 CODEN: PACHAS; ISSN: 0033-4545, 1980, XP009118342
- RUFLIN, CATHERINE ET AL: "Tetrakis(trimethylsilyl)hypophosphate P2O2(OTMS)4: synthesis, reactivity and application as flame retardant" HETEROATOM CHEMISTRY , 18(7), 721-731 CODEN: HETCE8; ISSN: 1042-7163, 2007, XP009118331
- MASSONE, CH. ET AL: "Polycations. Part 16. Polyphosphonium species containing phosphorus-phosphorus bonds" POLISH JOURNAL OF CHEMISTRY , 79(3), 481-485 CODEN: PJCHDQ; ISSN: 0137-5083, 2005, XP009118344

## Beschreibung

Der Gegenstand der vorliegenden Erfindung betrifft ungesättigte Diphosphinmonoxide, ein Verfahren zu ihrer Herstellung sowie ihre Verwendung als Flammschutzmittel.

Man ist bestrebt halogenhaltige Flammschutzmittel durch entsprechende halogenfreie Flammschutzmittel zu ersetzen. Besonders vorteilhaft ist es, wenn das Flammschutzmittel nicht nur physikalisch in das zu schützende Material eingemischt werden kann, sondern sich mit dessen Struktur verbindet und somit nicht aus dem Material durch physikalische Prozesse entfernt werden kann. Es besteht ein großer Bedarf an ungesättigten Diphosphinmonoxiden, die als Flammschutzmittel auch in polymerisierbare Kunststoffe eingearbeitet werden können. Die vorliegende Anmeldung beschreibt die Diphosphinmonoxide, die ungesättigte C, C-Bindungen enthalten.

WO 2005/103136 beschreibt thermoplastische Formmassen mit einer Flammschutzkomponente wie beispielsweise Triphenylphosphat und Ruflin et al. (Heteroatom Chemistry (2007), 18(7), 721-731) beschreibt die Verbindung Tetrakis(trimethylsilyl)hypophosphate sowie deren Verwendung als Flammschutzmittel insbesondere bei der Imprägnierung von Baumwollstoffen.

In Inorg. Nucl. Chem. Letters von 1967, Vol.3, auf Seite 313 wird die Umsetzung von Dialkyl- oder Diphenylphosphinchlorid mit Trimethoxyphosphin oder mit Methoxydiphenylphosphin zu dem entsprechenden Diphosphinmonoxid gemäß dem untenstehenden Schema beschrieben.

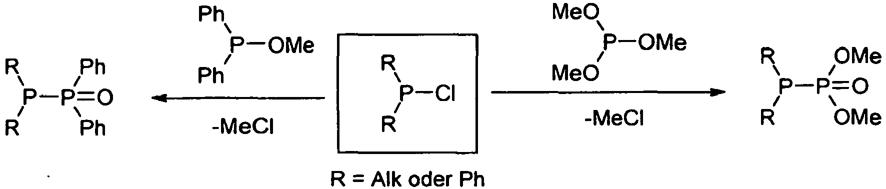

Der Nachteil der erhältlichen Dialkoxyderivate bzw. des Tetraphenyldiphosphinmonoxides ist, dass diese nicht in das polymerisierbare Netz des Kunststoffes chemisch eingebunden werden können.

Die Aufgabe der vorliegenden Erfindung ist es daher Verbindungen bereit zu stellen, die zum einen halogenfrei sind und zum anderen in eine Polymermatrix chemisch eingebunden werden können und des Weiteren hervorragende Flammschutzeigenschaften aufweisen.

Diese Aufgabe wird gelöst, durch Verbindungen der Formel I 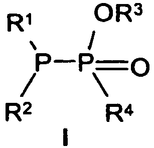 wobei die Reste R¹-R² sind unabhängig von einander ausgewählt aus der Gruppe von C₁-C₁₆-alkyl, C₁-C₁₆-alkenyl, C₁-C₁₆-alkoxy, C₁-C₁₆-alkenyloxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, NR²R³, COR², COOR² und CONR²R³, der Rest R³ eine Allylgruppe, und R⁴ einen Allyloxygruppe ist.

Vorteilhaft sind die erfindungsgemäßen Verbindungen, wenn OR³ und R⁴ in der Verbindung der Formel I identisch sind.

Ein weiterer Gegenstand der vorliegenden Erfindung ist ein Verfahren zur Herstellung der Verbindungen der Formel I nach einem der Ansprüche 1 bis 2, umfassend folgende Schritte
a) Umsetzung einer Verbindung der Formel II 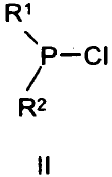
b) mit der Verbindung der Formel III 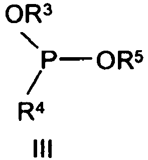 wobei der Rest R⁵ ausgewählt ist aus der Gruppe von C₁-C₁₆-alkyl, C₁-C₁₆-alkenyl, C₃-C₁₀-cycloalkyl oder C₆-C₁₀-aryl.

Vorteilhaft ist das erfindungsgemäße Verfahren, wenn die Umsetzung der Verbindung der Formel II mit der Verbindung der Formel III bei Temperaturen von 0 °C bis 150 °C durchgeführt wird.

Ein weiterer Gegenstand der Erfindung ist die Verwendung der Verbindungen der Formel I als Flammschutzmitteln in Kunststoffen.

Die Reste R¹-R² sind unabhängig von einander ausgewählt aus der Gruppe von C₁-C₁₆-alkyl, C₁-C₁₆-alkenyl, C₁-C₁₆-alkoxy, C₁-C₁₆-alkenyloxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, NR²R³, COR², COOR² und CONR²R³. Bevorzugte C₁-C₁₆-Alkylgruppen sind Methyl, Ethyl, n-Propyl, i-Propyl, n-Butyl, tert-Butyl, i-Butyl, Hexyl, Octyl, Decyl, Dodecyl, tetradecyl, 2-ethylhexyl- und 2-Propylheptyl.
Bevorzugte C₆-C₁₀-Arylgruppen sind Phenyl und Naphthyl. Besonders bevorzugt ist Phenyl.
Ganz besonders bevorzugt ist es, wenn die Reste R¹ und R² identisch sind. Insbesondere ganz besonders bevorzugt ist für R¹ und R² die Phenylgruppe.
Der Rest R³ ist eine Allylgruppe.
Der Rest R⁴ ist eine Allyoxygruppe.
Besonders bevorzugte Verbindungen sind solche bei denen die Reste R¹ und R² sowie die Reste OR³ und R⁴ identisch sind. Ganz besonders bevorzugt sind Verbindungen bei denen R¹ und R² C₆ - C₁₀ Arylgruppen, insbesondere Phenylgruppen sind.
Der Rest R⁵ bei dem erfindungsgemäßen Verfahren ist gleich R¹, R², R³ oder R⁴. Bevorzugt ist R⁵ gleich R3.

Die erfindungsgemäßen Verbindungen der Formel I werden durch Umsetzung der Verbindungen der Formel II mit denen der Formel III hergestellt.

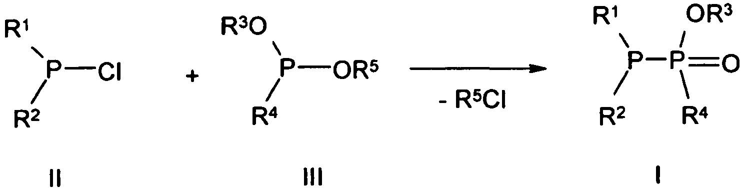

Die Umsetzung der Verbindungen der Formel II mit III kann in Gegenwart von Lösungsmitteln durchgeführt werden. Bevorzugte Lösungsmittel sind aromatische Lösungsmittel ausgewählt aus der Gruppe von Toluol, Xylol und Mesitylen. Die Reaktion wird bevorzugt bei Temperaturen im Bereich von 0 bis 150 °C, besonders bevorzugt im Bereich von 20 bis 120 °C, ganz besonders bevorzugt im Bereich von 20 bis 30°C durchgeführt. Das Lösungsmittel wird nach Vollendung der Reaktion entfernt. Das Lösungsmittel kann durch jede dem Fachmann bekannte Entfernungsmethode entfernt werden. Bevorzugt ist Destillieren. Das erhaltene Produkt wird anschließen getrocknet. Bevorzugt erfolgt die Trocknung im Vakuum im Bereich von 300 bis 3 mbar.
Das erhaltene Produkt kann als Flammschutzmitteln in unterschiedlichen Kunststoffen eingesetzt werden, indem sich das erfindungsgemäße Produkt durch Copolymerisation an das polymere Rückgrat gebunden wird oder durch Compoundieren zum Kunststoff beigemischt wird.

### Beispiel

### Herstellung von 1,1-Diphenyl-2,2-diallyloxy-diphosphinmonoxid

Triallylphosphit (101 g , 0,5 mol) in Toluol (500 ml) wird in einem Rührkolben vorgelegt. Innerhalb 1h wird Chlordiphenylphosphin (110.5 g, 0.5 mol) bei 25 °C zugetropft. Es wird 7 Stunden unter Rückfluss nachgerührt und anschließende abgekühlt. Toluol wird über eine Claisenbrücke bei 60°C und 1 mbar abdestilliert. Es wird bei Ölpumpenvakuum getrocknet. Das Produkt (147 g, 85 % Ausbeute) wird als gelbe klare Flüssigkeit mit der Reinheit > 80 % (³¹P NMR) erhalten. ³¹P NMR (Toluol-D8): -31.1 (d, ¹*J*204 Hz); 34.1 (d, ¹*J*204 Hz).

## Patentansprüche

1. Verbindungen der Formel **I** 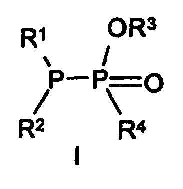 wobei die Reste R1-R2 sind unabhängig von einander ausgewählt aus der Gruppe von C₁-C₁₆-alkyl, C₁-C₁₆-alkenyl, C₁-C₁₆-alkoxy, C₁-C₁₆-alkenyloxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-Cl-C₁-C₁₆-alkoxy, NR²R³, COR², COOR² und CONR²R³, der Rest R³ eine Allylgruppe und R⁴ eine Allyloxygruppe ist.

2. Die Verbindungen des Anspruches 1, wobei OR³ und R⁴ in der Verbindung der Formel 1 identisch sind.

3. Verfahren zur Herstellung der Verbindungen der Formel I nach einem der Ansprüche 1 bis 2, umfassend folgende Schritte
a) Umsetzung einer Verbindung der Formel II 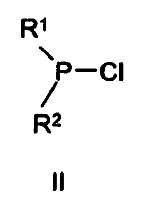
b) mit der Verbindung der Formel III 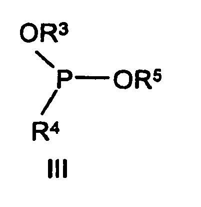 wobei der Rest R⁵ ausgewählt ist aus der Gruppe von C₁-C₁₆-alkyl, C₁-C₁₆-alkenyl, C₃-C₁₀-cycloalkyl oder C₆-C₁₀-aryl.

4. Verfahren nach Anspruch 3, wobei die Umsetzung der Verbindung der Formel II mit der Verbindung der Formel III bei Temperaturen von 0 °C bis 150 °C durchgeführt wird.

5. Verwendung der Verbindungen der Formel I als Flammschutzmitteln in Kunststoffen.

## Claims

1. A compound of the formula I 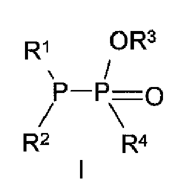 where the R1-R2 radicals are each independently selected from the group of C₁-C₁₆-alkyl, C₁-C₁₆-alkenyl, C₁-C₁₆-alkoxy, C₁-C₁₆-alkenyloxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, NR²R³, COR², COOR² and CONR²R³, the R³ radical is an allyl group and R⁴ is an allyloxy group.

2. The compounds of claim 1, wherein OR³ and R⁴ in the compound of the formula I are identical.

3. A process for preparing the compounds of the formula I according to either of claims 1 and 2, comprising the following steps
a) reacting a compound of the formula II 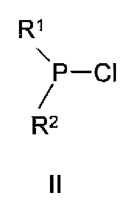
b) with the compound of the formula III 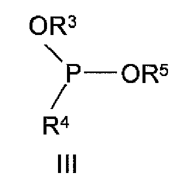 where the R⁵ radical is selected from the group of C₁-C₁₆-alkyl, C₁-C₁₆-alkenyl, C₃-C₁₀-cycloalkyl and C₆-C₁₀-aryl.

4. The process according to claim 3, wherein the reaction of the compound of the formula II with the compound of the formula III is carried out at temperatures of from 0°C to 150°C.

5. The use of the compounds of the formula I as flame retardants in plastics.

## Revendications

1. Composés de formule I 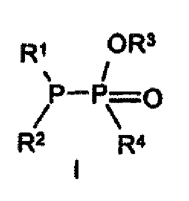 dans laquelle les radicaux R1 à R2 sont choisis indépendamment l'un de l'autre dans le groupe constitué par alkyle en C₁-C₁₆, alcényle en C₁-C₁₆, alcoxy en C₁-C₁₆, alcényloxy en C₁-C₁₆, cycloalkyle en C₃-C₁₀, cycloalcoxy en C₃-C₁₀, aryle en C₆-C₁₀, aryloxy en C₆-C₁₀, aryle en C₆-C₁₀-alkyle en C₁-C₁₆, aryle en C₆-C₁₀-alcoxy en C₁-C₁₆, NR²R³, COR², COOR² et CONR²R³, le radical R³ est un groupe allyle et R⁴ est un groupe allyloxy.

2. Composés selon la revendication 1, dans lesquels OR³ et R⁴ dans le composé de formule I sont identiques.

3. Procédé de fabrication des composés de formule I selon l'une quelconque des revendications 1 à 2, comprenant les étapes suivantes :
a) la mise en réaction d'un composé de formule II 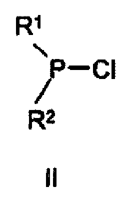
b) avec le composé de formule III 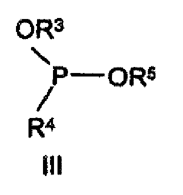 dans laquelle le radical R⁵ est choisi dans le groupe constitué par alkyle en C₁-C₁₆, alcényle en C₁-C₁₆, cycloalkyle en C₃-C₁₀ ou aryle en C₆-C₁₀.

4. Procédé selon la revendication 3, dans lequel la réaction du composé de formule II avec le composé de formule III est réalisée à des températures de 0 °C à 150 °C.

5. Utilisation des composés de formule I en tant qu'agents ignifuges dans des plastiques.
